# EUROPÄISCHE PATENTANMELDUNG

(11) **EP 1 491 380 A2**
(43) Veröffentlichungstag der Anmeldung: **29.12.2004**
(21) Anmeldenummer: 04102354.0
(22) Anmeldetag: 27.05.2004
(51) Int. Cl.: B60K 15/01

(54) **Auslaufschutz für eine im Gasinnendruckverfahren gefertigte Leitung**

(30) Priorität: 23.06.2003 DE 10328266
(71) Anmelder: SIEMENS AKTIENGESELLSCHAFT, 80333 München (DE)
(72) Erfinder: Zapp, Thomas, 44265 Dortmund (DE)

(57) **Zusammenfassung**

Bei einer Einrichtung zum Anschluss einer im Gasinnendruckverfahren gefertigten Leitung (1) eines Kraftstoffbehälters an weitere Bauteil ist ein Anschlussstück (2) stoffschlüssig mit der Leitung (1) verbunden. Das Anschlussstück (2) weist ein Rückschlagventil (3) auf, welches von einem an dem Bauteil angeordneten Rohrstück (8') in eine geöffnete Stellung bewegbar ist. Hierdurch lässt sich die Einrichtung besonders kostengünstig fertigen.

## Beschreibung

Die Erfindung betrifft einen Auslaufschutz für eine im Gasinnendruckverfahren gefertigte Leitung eines Kraftstoffbehälters.

Ein solcher Auslaufschutz wird bei heutigen Kraftfahrzeugen beispielsweise bei Kraftstofffiltern oder bei Entlüftungseinrichtungen häufig eingesetzt und ist aus der Praxis bekannt. Die im Gasinnendruckverfahren gefertigten Leitungen sind in der Regel einstückig mit einem Bauteil des Kraftstofffilters oder der Entlüftungseinrichtung gefertigt. Das Gasinnendruckverfahren ermöglicht eine besonders kostengünstige Fertigung der Leitung. Die an diesen Leitungen anzuschließenden Bauteile sind meist beispielsweise Leitungen oder Geräte. Bei der aus der Praxis bekannten Einrichtung wird das freie Ende der im Gasinnendruckverfahren gefertigten Leitung nachträglich zu einem Flansch geformt. An diesem Flansch wird das weitere Bauteil angeschlossen.

Nachteilig bei der bekannten Einrichtung ist, dass die aufwändige Formgebung des freien Endes der im Gasinnendruckverfahren gefertigten Leitung zu einer starken Erhöhung der Fertigungskosten führt.

Der Erfindung liegt das Problem zugrunde, eine Einrichtung der eingangs genannten Art so zu gestalten, dass sie besonders kostengünstig zu fertigen ist.

Dieses Problem wird erfindungsgemäß dadurch gelöst, dass ein mit dem weiteren Bauteil verbindbares Anschlussstück in das offene Ende der Leitung eingesetzt und gegenüber der Leitung abgedichtet ist.

Durch diese Gestaltung ist das Anschlussstück dem daran anzuschließenden Bauteil entsprechend zu gestalten. Die im Gasinnendruckverfahren gefertigte Leitung lässt sich daher im einfachsten Fall ohne Nacharbeitung in einer einfachen zylindrischen Form fertigen. Dies führt zu besonders geringen Fertigungskosten der erfindungsgemäßen Einrichtung.

Das Anschlussstück lässt sich gemäß einer vorteilhaften Weiterbildung der Erfindung einfach in die im Gasinnendruckverfahren gefertigten Leitungen einpressen, wenn es an seiner Außenseite im Wesentlichen zylindrisch gestaltet ist. Zur Erhöhung der Stabilität der Verbindung kann das Anschlussstück an seiner Außenseite umlaufende Rillen oder ein Tannenbaumprofil aufweisen.

Das Anschlussstück könnte beispielsweise mit der Leitung verklippst sein. Das Anschlussstück lässt sich jedoch gemäß einer anderen vorteilhaften Weiterbildung der Erfindung besonders einfach befestigen und gleichzeitig gegenüber der Leitung abdichten, wenn die Verbindung des Anschlussstücks mit der Leitung stoffschlüssig gestaltet ist.

Die Stoffschlüssigkeit der Verbindung des Anschlussstücks mit der Leitung könnte beispielsweise durch Klebstoff erzeugt werden. Zur weiteren Verringerung der Kosten der erfindungsgemäßen Einrichtung trägt es jedoch bei, wenn das Anschlussstück mit der Leitung verschweißt ist.

Die im Gasinnendruckverfahren gefertigte Leitung muss zusätzlich mit einem Rückschlagventil gesichert werden. Dabei können gemäß einer anderen vorteilhaften Weiterbildung der Erfindung zusätzlich zu montierende Bauteile vermieden werden, wenn das Anschlussstück ein Rückschlagventil aufweist.

In dem im Kraftstoffbehälter montierten Zustand lässt sich gemäß einer anderen vorteilhaften Weiterbildung der Erfindung ein Leerlaufen der im Gasinnendruck gefertigten Leitung während der Wartungsarbeiten vermeiden, wenn ein Ventilkörper des Rückschlagventils bei der Verbindung des weiteren Bauteils mit dem Anschlussstück von einer das Rückschlagventil verschließenden Stellung in eine das Rückschlagventil freigebende Stellung bewegbar ist.

Das Rückschlagventil gestaltet sich gemäß einer anderen vorteilhaften Weiterbildung der Erfindung konstruktiv besonders einfach, wenn das weitere Bauteil ein Rohrstück mit einem daran angeordneten, zur Bewegung des Ventilkörpers ausgebildeten Stab hat.

Zur weiteren konstruktiven Vereinfachung des Rückschlagventils trägt es gemäß einer anderen vorteilhaften Weiterbildung der Erfindung bei, wenn das weitere Bauteil eine nahe des freien Endes des Rohrstücks angeordnete Ausnehmung hat und zur Bewegung des Ventilkörpers mit dem Rohrstück ausgebildet ist.

Während der Trennung des mit der Leitung verbundenen Bauteils lässt sich gemäß einer anderen vorteilhaften Weiterbildung der Erfindung ein Auslaufen von Kraftstoff aus dem Rückschlagventil zuverlässig vermeiden, wenn das Rückschlagventil bei von dem Anschlussstutzen nahezu vollständig getrennten Bauteil geschlossen ist.

Die Erfindung lässt zahlreiche Ausführungsformen zu. Zur wieteren Verdeutlichung ihres Grundprinzips sind zwei davon in der Zeichnung dargestellt und werden nachfolgend beschrieben. Diese zeigt in
- Fig.1: eine erfindungsgemäße Einrichtung im Längsschnitt vor der Montage eines weiteren Bauteils,
- Fig.2: die erfindungsgemäße Einrichtung aus Figur 1 nach der Montage des weiteren Bauteils,
- Fig.3: eine weitere Ausführungsform der erfindungsgemäßen Einrichtung.

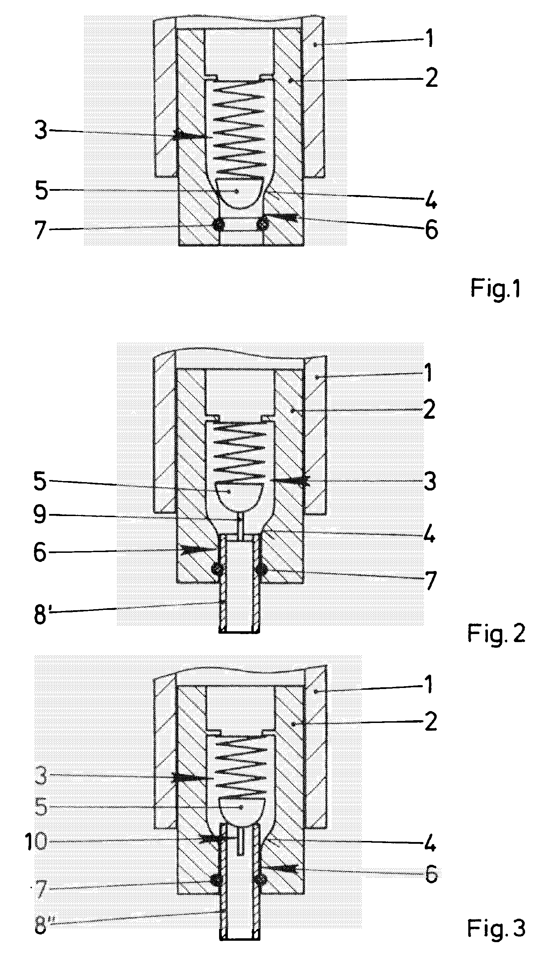

Figur 1 zeigt eine in einem Kraftstoffbehälter eines Kraftfahrzeuges einzusetzende Einrichtung mit einer im Gasinnendruckverfahren gefertigten Leitung 1 und mit einem in der Leitung 1 befestigten und gegenüber dieser abgedichteten Anschlussstück 2. Bei der Fertigung der Leitung 1 im Gasinnendruckverfahren wird flüssiger Kunststoff in eine Form gegeben und diese abgekühlt. Dabei verfestigt sich der Kunststoff an der Wandung der Form. Anschließend wird der flüssige Kunststoff ausgeblasen, so dass der an der Wandung der Form verfestigte Kunststoff die im Gasinnendruckverfahren gefertigte Leitung 1 bildet. Die Verbindung des Anschlussstücks 2 mit der Leitung 1 kann beispielsweise im Reibschweißverfahren erfolgt sein. Das Anschlussstück 2 hat ein Rückschlagventil 3. Das Rückschlagventil 3 hat einen in der eingezeichneten Stellung gegenüber einem Ventilsitz 4 vorgespannten Ventilkörper 5 und befindet sich damit in der geschlossenen Stellung. An dem aus der Leitung 1 herausragenden Ende ist eine zylindrische Ausnehmung 6 mit einem O-Ring 7 angeordnet. Die Ausnehmung 6 dient zur Aufnahme eines in Figur 2 dargestellten Rohrstücks 8.

Figur 2 zeigt die Einrichtung aus Figur 1 mit dem in die Ausnehmung 6 des Anschlussstücks 2 eingeführten Rohrstück 8' eines weiteren nicht dargestellten Bauteils. Bei dem weiteren Bauteil kann es sich beispielsweise um eine nicht dargestellte weitere Leitung oder einen Kraftstofffilter handeln. Das Rohrstück 8' weist an seinem freien Ende einen Stab 9 auf, welcher in der eingezeichneten Stellung den Ventilkörper 5 von dem Ventilsitz 4 wegdrückt. Hierdurch befindet sich das Rückschlagventil 3 in der geöffneten Stellung. Der O-Ring 7 dichtet das Rohrstück 8' gegenüber der Ausnehmung 6 ab.

Figur 3 zeigt eine weitere Ausführungsform der erfindungsgemäßen Einrichtung, bei dem ein Rohrstück 8'' nahe seines freien Endes eine seitliche Ausnehmung 10 hat. In der eingezeichneten Stellung drückt die Stirnseite des Rohstücks 8'' den Ventilkörper 5 von dem Ventilsitz 4 weg. Kraftstoff oder Luft kann daher von der im Gasinnendruck gefertigten Leitung 1 durch das Rückschlagventil 3 und die Ausnehmung 10 in dem Rohstück 8'' zu dem mit dem Rohrstück 8'' verbundenen Bauteil strömen.

Die Rohrstücke 8', 8'' aus den Figuren 2 und 3 und die Ausnehmung 6 des Anschlussstücks 2 sind so bemessen, dass der Ventilkörper 5 bereits gegen den Ventilsitz 4 gelangt, wenn das Rohrstück 8', 8'' nahezu vollständig aus der Ausnehmung 6 herausgezogen ist.

## Patentansprüche

1. Auslaufschutz zum Anschluss einer im Gasinnendruckverfahren gefertigten Leitung eines Kraftstoffbehälters, **dadurch gekennzeichnet , dass** ein mit dem weiteren Bauteil verbindbares Anschlussstück (2) in das offene Ende der Leitung (1) eingesetzt und gegenüber der Leitung (1) abgedichtet ist.

2. Auslaufschutz nach Anspruch 1, **dadurch gekennzeichnet , dass** das Anschlussstück (2) an seiner Außenseite im Wesentlichen zylindrisch gestaltet ist.

3. Auslaufschutz nach Anspruch 1 oder 2, **dadurch gekennzeichnet dass** die Verbindung des Anschlussstücks (2) mit der Leitung (1) stoffschlüssig gestaltet ist.

4. Auslaufschutz nach zumindest einem der vorhergehenden Ansprüche, **dadurch gekennzeichnet, dass** das Anschlussstück (2) mit der Leitung (1) verschweißt ist.

5. Auslaufschutz nach zumindest einem der vorhergehenden Ansprüche, **dadurch gekennzeichnet, dass** das Anschlussstück (2) ein Rückschlagventil (3) aufweist.

6. Auslaufschutz nach zumindest einem der vorhergehenden Ansprüche, **dadurch gekennzeichnet , dass** ein Ventilkörper (5) des Rückschlagventils (3) bei der Verbindung des weiteren Bauteils mit dem Anschlussstück (2) von einer das Rückschlagventil (3) verschließenden Stellung in eine das Rückschlagventil (3) freigebende Stellung bewegbar ist.

7. Auslaufschutz nach zumindest einem der vorhergehenden Ansprüche, **dadurch gekennzeichnet , dass** das weitere Bauteil ein Rohrstück (8') mit einem daran angeordneten, zur Bewegung des Ventilkörpers (5) ausgebildeten Stab (9) hat.

8. Auslaufschutz nach zumindest einem der vorhergehenden Ansprüche, **dadurch gekennzeichnet , dass** das weitere Bauteil eine nahe des freien Endes des Rohrstücks (8'') angeordnete Ausnehmung (10) hat und zur Bewegung des Ventilkörpers (5) mit dem Rohrstück (8'') ausgebildet ist.

9. Auslaufschutz nach zumindest einem der vorhergehenden Ansprüche, **dadurch gekennzeichnet , dass** das Rückschlagventil (3) bei von dem Anschlussstutzen (2) nahezu vollständig getrennten Bauteil geschlossen ist.
